# DEMANDE DE BREVET EUROPEEN

(11) **EP 2 700 855 A1**
(43) Date de publication de la demande: **26.02.2014**
(21) Numéro de dépôt: 13354030.2
(22) Date de dépôt: 23.08.2013
(51) Int. Cl.: F16K 31/53

(54) **Actionneur de vanne**

(30) Priorité: 24.08.2012 FR 1202297
(71) Demandeur: Cote, Pierre-Yves, 26120 Montmeyran (FR)
(72) Inventeur: Cote, Pierre-Yves, 26120 Montmeyran (FR)
(74) Mandataire: Hecké, Gérard

(57) **Abrégé**

Actionneur de vanne, comprenant une roue dentée (21) apte à être animée en rotation pour commander la vanne, un volant de commande (16) pour entraîner en rotation la roue dentée (21) de façon manuelle, un moteur (15) pour entraîner en rotation la roue dentée (21) de façon automatique, et un pignon (20) monté mobile en rotation pour engrener la roue dentée (21), et monté mobile en translation entre une première position (P) dans laquelle le pignon (20) est entraîné en rotation par le volant de commande (16) et une deuxième position dans laquelle le pignon (20) est entraîné en rotation par le moteur (15).

## Description

### Domaine technique de l'invention

L'invention est relative à un actionneur de vanne, notamment une vanne pour la distribution d'un fluide.

### État de la technique

Actuellement, on utilise des vannes pour distribuer des fluides qui sont commandées de façon manuelle à l'aide d'un volant de commande. La vanne comprend un obturateur couplé au volant de commande par un système d'engrenages, et le volant commande l'obturateur pour fermer ou ouvrir la vanne. Certaines vannes peuvent en outre être équipées d'un moteur pneumatique pour commander la vanne de manière automatique. On peut citer, par exemple, les documents de brevet britannique GB 1105629, GB 2223820 et GB 1005059 qui divulguent un tel type de vanne. Ainsi, on peut effectuer une maintenance du système d'engrenages, ou du moteur pneumatique, tout en permettant une commande de la vanne. Le moteur pneumatique peut comporter un train d'engrenages épicycloïdal configuré pour entraîner le système d'engrenages afin de commander la vanne. A l'aide d'une goupille, l'utilisateur bloque une roue extérieure du train d'engrenages épicycloïdal de façon à permettre au moteur pneumatique de commander automatiquement la vanne. Mais le volant de commande reste couplé au système d'engrenages, et lorsque le moteur pneumatique commande l'obturateur, le volant de commande est déplacé simultanément. Un tel actionneur peut entraîner des accidents, par exemple lorsque l'utilisateur qui déplace la goupille est proche du volant de commande et que l'on commande le moteur pneumatique pour fermer la vanne. En outre, la goupille doit être déplacée manuellement par l'utilisateur en local, ce qui ne permet pas de commander à distance le changement de mode automatique/manuel de commande de la vanne.

### Objet de l'invention

L'objet de l'invention consiste à pallier ces inconvénients, et en particulier à fournir un actionneur de vanne qui permette une commande automatique ou manuelle de la vanne.

Un autre objet de l'invention est de proposer un actionneur de vanne compatible avec des contraintes de fonctionnement imposées aux actionneurs de vannes, par exemple des contraintes en milieu explosif qui interdisent l'utilisation de commandes électriques.

Selon un aspect de l'invention, il est proposé un actionneur de vanne, comprenant une roue dentée apte à être animée en rotation pour commander la vanne, un volant de commande pour entraîner en rotation la roue dentée de façon manuelle, et un moteur pour entraîner en rotation la roue dentée de façon automatique.

L'actionneur comporte un pignon monté mobile en rotation pour engrener la roue dentée, et monté mobile en translation entre une première position dans laquelle le pignon est entraîné en rotation par le volant de commande et une deuxième position dans laquelle le pignon est entraîné en rotation par le moteur.

Ainsi, on fournit un actionneur de vanne qui peut commander la vanne, soit de façon manuelle, soit de façon automatique et qui découple les modes de commande afin qu'un seul mode de commande puisse manoeuvrer la vanne. L'actionneur peut comprendre un coulisseau monté déplaçable en translation le long d'un axe de translation du pignon, le pignon étant monté libre en rotation sur une extrémité du coulisseau, l'actionneur comprenant en outre un arbre menant apte à être entraîné par le volant de commande, l'arbre menant étant un arbre creux traversé par le coulisseau et comportant des moyens d'entraînement configurés pour entraîner en rotation le pignon lorsque le pignon est dans la première position.

Un tel actionneur permet de commander la vanne à distance, tout en garantissant la sécurité des utilisateurs qui sont à proximité de la vanne.

Le moteur peut être un moteur du type pneumatique, ou hydraulique, afin de pouvoir être utilisé dans des conditions de fonctionnement contraignantes qui interdisent l'utilisation de moyens électriques.

Le moteur peut être configuré pour entraîner le pignon en rotation lorsque le coulisseau est déplacé en translation de façon que le pignon soit dans la deuxième position.

L'actionneur peut comprendre un organe élastique configuré pour exercer une force sur le coulisseau, de façon à maintenir le pignon dans la première position, et pour se déformer de façon à permettre le déplacement en translation du coulisseau.

L'actionneur peut comprendre un arbre d'entraînement apte à entraîner le pignon en rotation, le volant de commande étant monté libre en rotation sur l'arbre d'entraînement, l'actionneur comprenant en outre un moyen de sécurité mobile entre une position de verrouillage dans laquelle le volant de commande est relié mécaniquement à l'arbre d'entraînement et une position de sécurité dans laquelle le volant de commande est maintenu libre en rotation sur l'arbre d'entraînement.

Ainsi, on peut uniquement commander manuellement la vanne lors d'une action volontaire de l'utilisateur. En d'autres termes, on empêche toute commande manuelle intempestive de la vanne.

Le moyen de sécurité peut comporter une goupille montée mobile sur le volant de commande et un flasque monté fixe sur l'arbre d'entraînement, le flasque comportant un orifice prévu pour recevoir la goupille dans sa position de verrouillage.

Le pignon peut être configuré pour être relié mécaniquement à l'arbre d'entraînement lorsque le pignon est dans sa première ou sa deuxième position.

Grâce à un tel pignon, on garantit une liaison mécanique entre la roue dentée et l'arbre d'entraînement de sorte que la vanne est prête à être commandée manuellement lorsque le pignon quitte sa deuxième position, en particulier lorsque le coulisseau est déplacé en translation de façon que le pignon soit dans la première position.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2, illustrent schématiquement des vues en coupe de modes de réalisation d'un actionneur de vanne ;
- la figure 3, illustre schématiquement une vue en coupe d'un dispositif de limitation d'un couple moteur ;
- la figure 4, illustre de façon schématique une vue en coupe selon l'axe A-A de la figure 3 ;
- les figures 5 et 6, illustrent schématiquement deux vues en coupe de modes de réalisation d'une vanne de distribution d'un fluide ;
- la figure 7, illustre schématiquement une vue en perspective d'une vanne de distribution d'un fluide démontée ;
- les figures 8 à 10, illustrent schématiquement des vues en perspective d'autres modes de réalisation d'une vanne de distribution d'un fluide ; et
- la figure 11 illustre schématiquement une vue en coupe d'un autre mode de réalisation d'un actionneur de vanne.

### Description détaillée

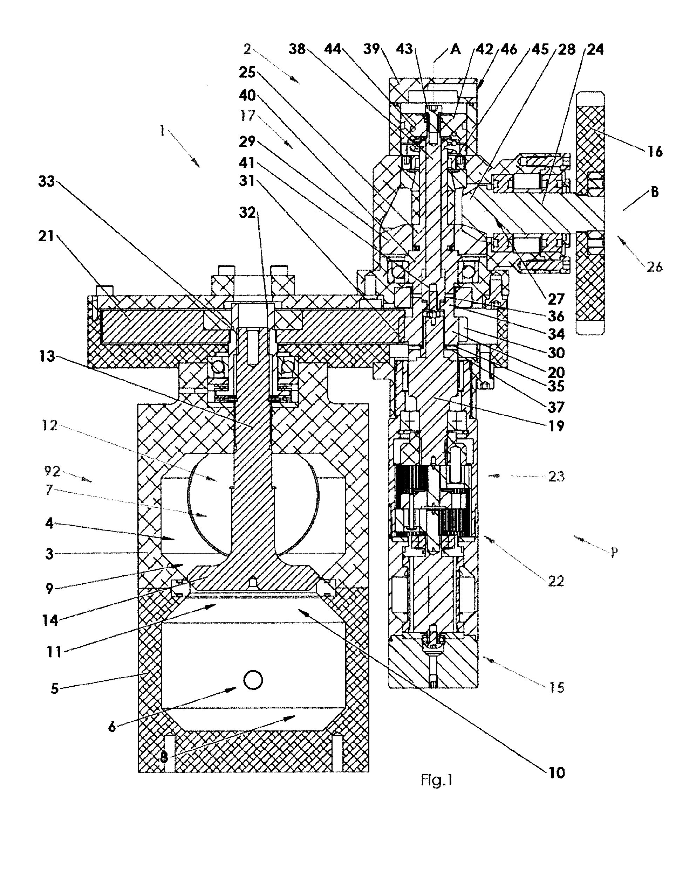

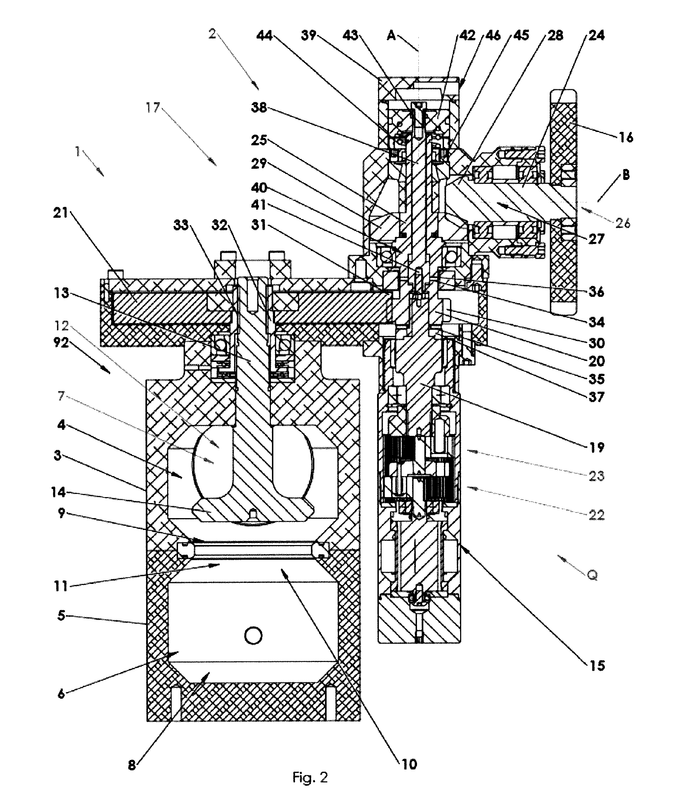

Sur les figures 1 et 2, on a représenté de façon schématique une vanne 1 pour la distribution d'un fluide sur laquelle est monté un actionneur 2 de vanne. L'actionneur 2 permet de commander l'ouverture et la fermeture de la vanne 1. La vanne 1 a un corps 92 comprenant un premier module 3 délimitant une première chambre 4, et un deuxième module 5 délimitant une deuxième chambre 6. En outre, le premier module 3 comprend une première ouverture 7 pour un premier passage du fluide, et le deuxième module 5 comprend une deuxième ouverture 8 pour un deuxième passage du fluide. Par ailleurs, les premier et deuxième modules 3, 5 ont chacun une ouverture supplémentaire respectivement référencées par les références 9 et 10. Les ouvertures supplémentaires 9, 10 coïncident entre elles de façon à former une ouverture intermédiaire 11 pour un passage du fluide d'une chambre à l'autre. En d'autres termes, l'ouverture intermédiaire 11 permet une communication entre les deux chambres 4, 6. Selon un mode de réalisation, le premier module 3 est un module de sortie, et le fluide sort de la première chambre vers l'extérieur du corps 92 en traversant la première ouverture 7. Dans ce mode de réalisation, le deuxième module 5 est un module d'entrée, et le fluide entre dans la deuxième chambre 6 en traversant la deuxième ouverture 8, puis traverse l'ouverture intermédiaire 11 et sort du corps 92 par le module de sortie 3. Selon un autre mode de réalisation, le premier module 3 est un module d'entrée du fluide, et le deuxième module 5 est un module de sortie du fluide. Dans cet autre mode de réalisation, le fluide entre dans la première chambre 4, traverse l'ouverture intermédiaire 11 et sort de la deuxième chambre 6 en traversant la deuxième ouverture 8.

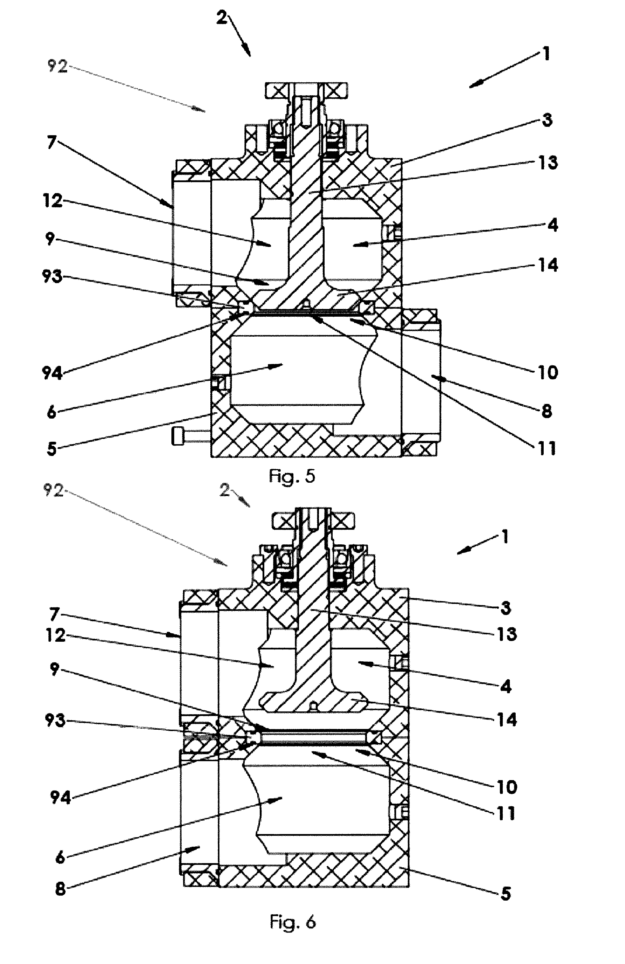

Le premier module 3 comprend un élément de fermeture 12 pour fermer et ouvrir la vanne 1. L'élément de fermeture 12 est monté mobile entre une position de fermeture dans laquelle il obture l'ouverture intermédiaire 11, et une position d'ouverture dans laquelle le fluide traverse l'ouverture intermédiaire 11. Sur les figures 1 et 5, on a représenté l'élément de fermeture 12 dans sa position de fermeture dans laquelle la vanne 1 est fermée, et sur les figures 2 et 6, on a représenté l'élément de fermeture 12 dans sa position d'ouverture dans laquelle la vanne 1 est ouverte. Dans l'exemple illustré aux figures 1, 2, 5 et 6, l'élément de fermeture 12 est une soupape 12 munie d'une tige 13 dont une première extrémité forme une tête 14. La deuxième extrémité de la tige 13 est quant à elle reliée à l'actionneur 2 de vanne 1 qui permet de commander le déplacement de la tige 13 dans la position d'ouverture et de fermeture. Sur les figures 1 et 5, la soupape 12 est dans la position de fermeture dans laquelle la tête 14 obture l'ouverture intermédiaire 11 et la vanne 1 est fermée. Sur les figures 2 et 6, la soupape 12 est dans la position d'ouverture dans laquelle la tête 14 a été déplacée vers l'intérieur de la première chambre 4, la soupape 12 n'obture pas l'ouverture intermédiaire 11, et la vanne 1 est ouverte.

L'actionneur 2 comporte un moteur 15, un volant de commande manuel 16, un pignon mobile 20, une roue dentée 21, et un dispositif de transmission de couple 17. La roue dentée 21 peut être une roue entière, une demie roue ou un quart de roue. De manière générale, l'actionneur 2 permet de transmettre, soit un couple fourni par le volant de commande 16 à la roue dentée 21, soit un couple fourni par le moteur 15 à la roue dentée 21.

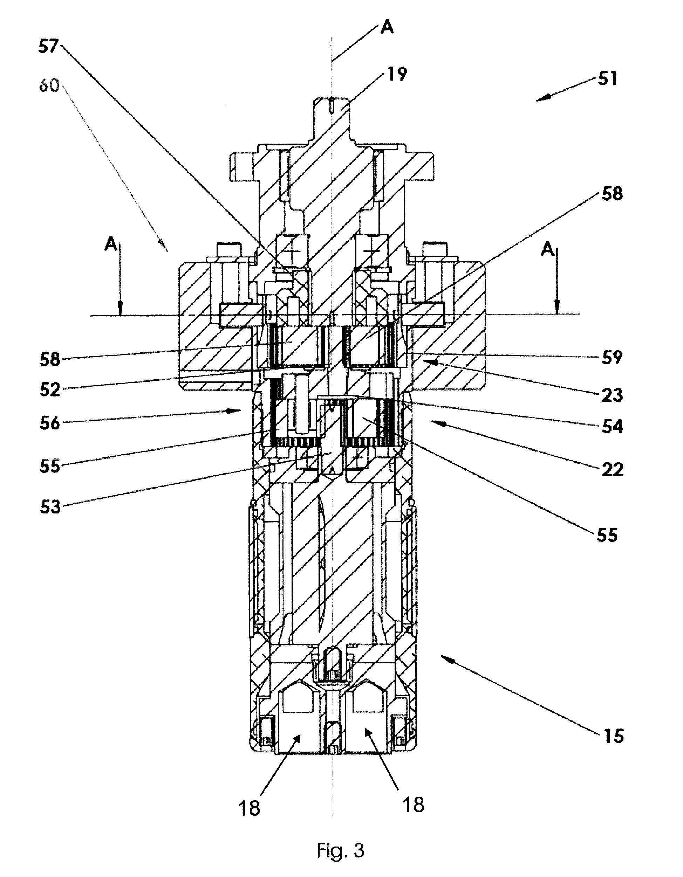

Le moteur 15 peut être un moteur électrique ou hydraulique, et préférentiellement un moteur pneumatique. Sur les figures 1 à 3, on a représenté un moteur 15 du type pneumatique comprenant au moins une embouchure 18, représentée à la figure 3, pour recevoir un gaz à comprimer, tel de l'air de l'azote ou un gaz rare comme l'argon. Le moteur 15 comprend au moins un arbre moteur 19 apte à être animé en rotation autour d'un axe longitudinal A du moteur 15 lorsque le moteur 15 est démarré. L'axe longitudinal A est sensiblement parallèle à la tige 13 de la soupape 12. Avantageusement, le moteur 15 peut comprendre un dispositif de réduction du couple fourni par le moteur 15 comportant un ou plusieurs trains d'engrenages épicycloïdaux. Selon un mode de réalisation illustré aux figures 1 à 4, le moteur 15 comprend un dispositif de réduction du couple fourni comportant un premier train d'engrenages épicycloïdal 22 couplé à un deuxième train d'engrenages épicycloïdal 23, l'arbre moteur 19 étant couplé au deuxième train d'engrenages 23.

Le dispositif de transmission de couple 17 comprend un arbre d'entraînement 24 et un arbre menant 25. L'arbre d'entraînement 24 a une première extrémité 26 montée fixe sur le volant de commande 16 et une deuxième extrémité 27 munie d'un premier pignon fixe conique 28. L'arbre d'entraînement 24 est sensiblement perpendiculaire à l'axe longitudinal A. En outre, l'arbre d'entraînement 24 est entraîné en rotation par le volant de commande 16 autour d'un axe B sensiblement perpendiculaire à l'axe longitudinal A. L'arbre menant 25 est sensiblement parallèle à l'axe longitudinal A et comprend un deuxième pignon fixe conique 29 dont les dents coopèrent avec celles du premier pignon fixe conique 28. Lorsque l'arbre d'entraînement 24 est animé en rotation autour de l'axe B par le volant de commande 16, le premier pignon fixe 28 engrène le deuxième pignon fixe 29 pour animer l'arbre menant 25 en rotation autour de l'axe longitudinal A. Le pignon mobile 20 a une forme globalement cylindrique. Le pignon mobile 20 comprend une première couronne de dentures externes 30 qui coopère avec une deuxième couronne de dentures externes 31 prévue sur la roue dentée 21, pour animer cette dernière en rotation. La roue dentée 21 a une forme globalement cylindrique et comporte au niveau de sa partie centrale un filetage femelle interne 32 qui coopère avec un filetage male externe 33 prévu sur la deuxième extrémité de la tige 13 de la soupape 12, opposée à la tête 14. Lorsque la roue dentée 21 est animée en rotation selon un premier sens de rotation déterminé, la tige 13 de la soupape 12 est animée en translation et la tête 14 se déplace à l'intérieur de la première chambre 4 pour ouvrir la vanne 1. Lorsque la roue dentée 21 est animée en rotation selon un deuxième sens de rotation inverse, la tige 13 de la soupape 12 est animée en translation et la tête 14 se déplace pour obturer l'ouverture intermédiaire 11 afin de fermer la vanne 1.

Par ailleurs, le pignon mobile 20 comporte, sur une première face orientée vers l'arbre menant 25, un premier crabot 34, et, sur une deuxième face opposée orientée vers l'arbre moteur 19, un deuxième crabot 35. L'arbre menant 25 comporte, à une première extrémité, un troisième crabot 36 apte à coopérer avec le premier crabot 34 pour entraîner le pignon mobile 20 en rotation autour de l'axe longitudinal A. L'arbre moteur 19 comporte à une extrémité un quatrième crabot 37 apte à coopérer avec le deuxième crabot 35 pour entraîner le pignon mobile 20 en rotation autour de l'axe longitudinal A. En outre, le pignon mobile 20 est monté mobile en translation le long de l'axe longitudinal A entre une première position P, illustrée sur la figure 1, dans laquelle le pignon mobile 20 est entraîné en rotation par l'arbre menant 25, et une deuxième position Q, illustrée sur la figure 2, dans laquelle le pignon mobile 20 est entraîné en rotation par l'arbre moteur 19. Dans la première position P, le troisième crabot 36 de l'arbre menant 25 crabote le premier crabot 34 du pignon mobile 20, et le dispositif de transmission de couple 17 permet de faire transiter le couple fourni par le volant de commande 16 par successivement, l'arbre d'entraînement 24, l'arbre menant 25, le pignon mobile 20 et la roue dentée 21. Dans la deuxième position Q, le quatrième crabot 37 de l'arbre moteur 19 crabote le deuxième crabot 35 du pignon mobile 20, et permet de faire transiter le couple fourni par le moteur 15 par successivement, l'arbre moteur 19, le pignon mobile 20 et la roue dentée 21. En outre, lorsque le pignon mobile 20 est dans la première position P, le quatrième crabot 37 ne crabote pas le pignon mobile 20 et le moteur 15 n'entraîne pas en rotation le pignon mobile 20. Ainsi, dans la première position P, la roue dentée 21 qui permet de commander la vanne 1 est entraînée uniquement par le volant de commande 16. A l'inverse, lorsque le pignon mobile 20 est dans la deuxième position Q, le troisième crabot 36 ne crabote pas le pignon mobile 20 et le volant de commande 16 n'entraîne pas en rotation le pignon mobile 20. Ainsi, dans la deuxième position Q, la roue dentée 21 est entraînée uniquement par le moteur 15.

Afin de déplacer le pignon mobile 20 d'une position à l'autre, l'actionneur 2 comporte en outre un coulisseau 38 et un cylindre creux 39 dans lequel sont logés le coulisseau 38 et l'arbre menant 25. Le cylindre creux 39 est situé en regard du moteur 15, dans l'alignement de l'axe longitudinal A. Par ailleurs, l'arbre menant 25 est un arbre creux traversé par le coulisseau 38. Le coulisseau 38 comporte une première extrémité solidarisée au pignon mobile 20 à l'aide de moyens de solidarisation 40. Les moyens de solidarisation 40 comprennent une vis 41 vissée dans le corps du coulisseau 38 et qui traverse le pignon mobile 20. Les moyens de solidarisation 40 permettent de maintenir ensemble le coulisseau 38 avec le pignon mobile 20 tout en permettant au pignon mobile 20 d'être libre en rotation autour de l'axe longitudinal A. Le coulisseau 38 est en outre déplaçable, à l'intérieur de l'arbre menant 25, en translation le long de l'axe A, de façon à déplacer le pignon mobile 20 en translation entre la première position P et la deuxième position Q. Le coulisseau 38 comporte également une tête 42 fixée à sa deuxième extrémité, via une vis 43. La tête 42 du coulisseau 38 est en appui sur un organe élastique, tel un ressort 44, logé dans le cylindre creux 39. Le ressort 44 est en outre en appui entre la tête 42 du coulisseau 38 et une butée 45 située dans la partie interne du cylindre creux 39. Lorsque le ressort 44 est en position de repos, il écarte la tête 42 de la butée 45 de façon à maintenir le pignon mobile 20 dans la première position P. Lorsque la tête 42 du coulisseau 38 est déplacée en translation selon l'axe longitudinal A, la tête 42 comprime le ressort 44 et déplace le pignon mobile 20 dans la deuxième position Q. Selon un mode de réalisation préférentiel, l'actionneur 2 comprend des moyens de pilotage configurés pour déplacer en translation la tête 42 du coulisseau 38. Dans ce mode de réalisation préférentiel, le cylindre creux 39 comporte un évent 46 pour une arrivée d'un air comprimé fourni par les moyens de pilotage. En d'autres termes, l'ensemble comprenant le cylindre creux 39, le coulisseau 38 et la tête 42 fonctionne comme un vérin pneumatique.

Lorsqu'on souhaite manoeuvrer la vanne 1 manuellement, on désactive les moyens de pilotage de l'actionneur 2. Dans ce cas, le ressort 44 est dans sa position de repos et il maintient le pignon mobile 20 dans la première position P. On manoeuvre alors le volant de commande 16 pour ouvrir ou fermer la vanne 1 de façon manuelle. Puis, lorsqu'on souhaite commander la vanne 1 automatiquement, par exemple à distance, on active les moyens de pilotage. Dans ce cas, les moyens de pilotage déplacent la tête 42 du coulisseau 38 pour déplacer en translation le pignon mobile 20 dans la deuxième position Q. Puis, on démarre le moteur 15 qui entraîne en rotation le pignon mobile 20 pour ouvrir ou fermer la vanne 1 de façon automatique. On commande alors le moteur 15 pour ouvrir ou fermer la vanne 1, sans déplacer le volant de commande 16.

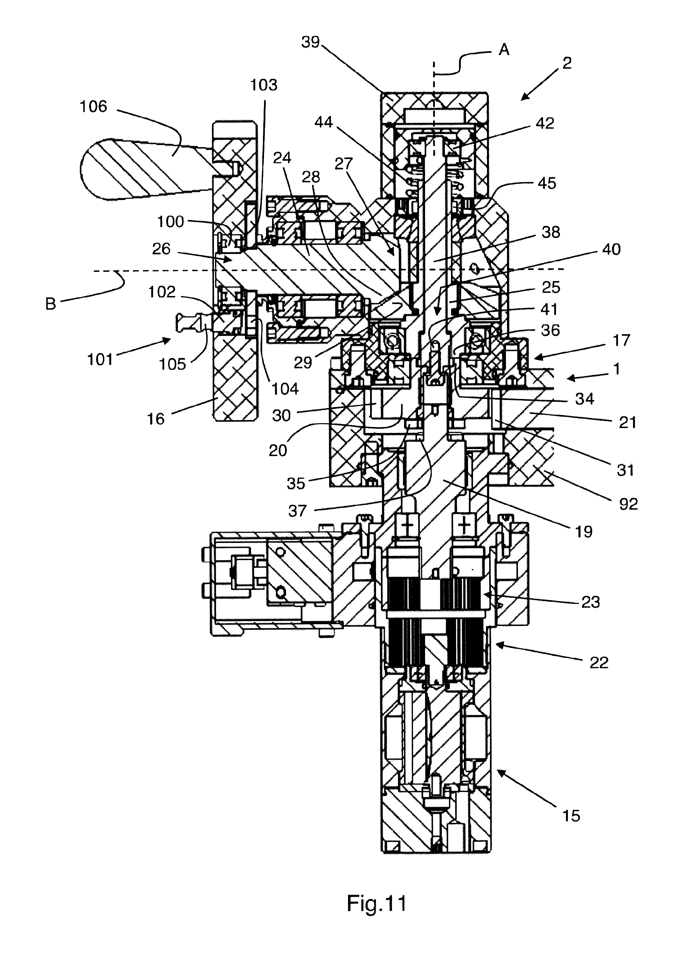

Sur la figure 11, on a représenté un autre mode de réalisation d'un actionneur 2 de vanne 1. Dans cet autre mode de réalisation, le volant de commande 16 est monté libre en rotation sur l'arbre d'entraînement 24, par exemple par l'intermédiaire d'un roulement 100. Le roulement 100 peut, par exemple, être un roulement à billes ou à rouleaux. Lorsque le volant de commande 16 est libre en rotation sur l'arbre d'entraînement 24, il n'entraîne pas l'arbre 24 et dans ce cas la vanne 1 ne peut pas être commandée manuellement. En outre, l'actionneur 2 comprend un moyen de sécurité 101 mobile entre une position de verrouillage dans laquelle le volant de commande 16 est relié mécaniquement à l'arbre d'entraînement 24 et une position de sécurité dans laquelle le volant de commande 16 est maintenu libre en rotation sur l'arbre d'entraînement 24. En d'autres termes, lorsque le moyen de sécurité 101 est dans la position de verrouillage, le volant de commande 16 entraîne l'arbre d'entraînement 24 et peut entraîner le pignon 20 en rotation pour commander la vanne 1. A l'inverse, lorsque le moyen de sécurité est dans la position de sécurité, la vanne 1 ne peut pas être commandée par le volant de commande 16. Sur la figure 11, on a représenté le moyen de sécurité 101 dans la position de sécurité dans laquelle le volant de commande 16 est maintenu libre en rotation selon l'axe B. Ainsi, l'utilisateur ne peut pas entraîner en rotation le pignon 20 et ne peut donc pas commander la vanne 1. Par exemple, le moyen de sécurité 101 peut comprendre une goupille 102, tel un élément cylindrique, montée mobile sur le volant de commande 16. En particulier, la goupille 102 est montée mobile en translation selon un axe parallèle à l'axe de rotation B de l'arbre d'entraînement 24. En outre, le moyen de sécurité 101 comporte un flasque 103 monté fixe sur l'arbre d'entraînement 24, le flasque 103 comportant un orifice 104 prévu pour recevoir la goupille 102 dans sa position de verrouillage. Dans la position de verrouillage, la goupille 102 est logée dans l'orifice 104, ce qui permet de relier mécaniquement le volant de commande 16 avec l'arbre d'entraînement 24, et dans ce cas la vanne 1 peut être commandée manuellement. Dans la position de sécurité, la goupille 102 est translatée depuis la position de verrouillage et n'est plus engagée dans l'orifice 104, dans ce cas le volant de commande 16 n'est plus relié mécaniquement à l'arbre d'entraînement 24 et la vanne 1 ne peut plus être commandée mécaniquement. Avantageusement, la goupille 102 comporte un orifice 105 pour le passage d'un cadenas qui empêche la goupille 102 de translater parallèlement à l'axe B. En outre, l'orifice 105 de la goupille 102 n'est accessible que lorsque la goupille 102 est dans la position de sécurité. Selon encore un autre avantage, le volant de commande 16 est équipé d'une poignée 106 située perpendiculairement au volant 16 afin de faciliter sa mise en rotation.

Dans cet autre mode de réalisation, lorsqu'on souhaite manoeuvrer la vanne 1 manuellement, on désactive les moyens de pilotage de l'actionneur 2. Dans ce cas, le ressort 44 est dans sa position de repos et il maintient le pignon mobile 20 dans la première position P. Puis on translate le moyen de sécurité 101 dans la position de verrouillage. Puis on manoeuvre alors le volant de commande 16 pour ouvrir ou fermer la vanne 1 de façon manuelle. Lorsqu'on souhaite commander la vanne 1 automatiquement, par exemple à distance, on active les moyens de pilotage. Dans ce cas, les moyens de pilotage déplacent la tête 42 du coulisseau 38 pour déplacer en translation le pignon mobile 20 dans la deuxième position Q. On translate le moyen de sécurité 101 dans la position de sécurité afin d'empêcher toute commande manuelle intempestive. Puis, on démarre le moteur 15 qui entraîne en rotation le pignon mobile 20 pour ouvrir ou fermer la vanne 1 de façon automatique. On commande alors le moteur 15 pour ouvrir ou fermer la vanne 1, sans déplacer le volant de commande 16.

En variante, le pignon 20 peut être configuré pour être relié mécaniquement à l'arbre d'entraînement 24 lorsque le pignon 20 est dans sa première ou sa deuxième position P, Q. Par exemple, le troisième crabot 36 de l'arbre menant 25 peut comporter des dents configurées pour rester en contact avec celles du premier crabot 34 du pignon 20, quelle que soit la première ou deuxième position du pignon 20. Ainsi, lorsque le pignon 20 est dans la deuxième position Q et que le moteur 15 est démarré, le pignon 20 est mis en rotation, ce qui permet de commander la vanne 1, et l'arbre d'entraînement 24 est également mis en rotation car le pignon 20 reste relié mécaniquement à l'arbre d'entraînement 24. Dans ce cas, afin d'éviter tout risque de commander la vanne 1 de façon automatique par le moteur 15 et manuellement par le volant de commande 16, on déplace le moyen de sécurité 101 dans la position de sécurité pour empêcher de commander manuellement la vanne 1 lorsque le moteur 15 est démarré. Par ailleurs, lorsqu'on arrête le moteur 15, le pignon 20 reste relié mécaniquement à l'arbre d'entraînement 24, et dans ce cas, si l'on déplace le moyen de sécurité 101 dans la position de verrouillage la vanne 1 peut être commandée manuellement. La variante qui vient d'être décrite garantit le fait de pouvoir commander la vanne 1 de façon manuelle, par exemple lors d'une panne du moteur 15.

Un tel actionneur est particulièrement adapté pour pouvoir commander la vanne à distance, sans besoin électrique, par des moyens pneumatique ou hydraulique. Un tel actionneur permet également de pouvoir commander la vanne manuellement.

Sur la figure 3, on a représenté un dispositif de limitation 51 d'un couple fourni par le moteur 15. En outre, le moteur 15 peut être du type pneumatique qui est particulièrement adapté pour commander la vanne 1 utilisée en milieu explosif et qui doit respecter des normes de sécurité contraignantes, par exemple ne pas utiliser des moteurs électriques. Un tel dispositif de limitation 51 n'est pas uniquement limité aux moteurs pour commander des vannes et peut être adapté pour d'autres systèmes entraînés par des moteurs du type électrique, hydraulique, ou manuel, telle une manivelle, et préférentiellement pneumatique. Le moteur 15 a un corps ayant globalement la forme d'un cylindre creux. Le moteur pneumatique 15 comprend en outre un arbre intermédiaire 52, un arbre rotor 53, et l'arbre moteur 19 destiné à fournir un couple du moteur, en particulier à un actionneur de vanne.

Le premier train d'engrenages épicycloïdal 22 comporte un premier porte satellites 54 monté fixe sur une première extrémité de l'arbre intermédiaire 52, au moins un satellite 55, et une première couronne extérieure 56 montée fixe sur une paroi interne du cylindre creux du corps du moteur 15. De préférence, le premier train d'engrenages 22 comprend trois satellites 55. Les satellites 55 sont montés libre en rotation sur le premier porte satellites 54 et s'engrènent avec la première couronne extérieure 56 et avec l'arbre rotor 53. L'arbre rotor 53 comprend à une extrémité, un pignon monté fixe qui engrène les satellites 55 du premier train d'engrenages 22. Lorsque l'arbre rotor 53 est entraîné en rotation autour de l'axe longitudinal A, il entraîne en rotation les satellites 55 qui entraînent en rotation le premier porte satellites 54, et ce dernier entraîne en rotation l'arbre intermédiaire 52.

Le deuxième train d'engrenages épicycloïdal 23 comporte un deuxième porte satellites 57 monté fixe sur l'arbre moteur 19, au moins un satellite 58, et une deuxième couronne extérieure 59 montée libre en rotation. De préférence, le deuxième train d'engrenages 23 comprend trois satellites 58. Les satellites 58 sont montés libre en rotation sur le deuxième porte satellites 57 et s'engrènent avec la deuxième couronne extérieure 59 et avec l'arbre intermédiaire 52. L'arbre intermédiaire 52 comprend une deuxième extrémité munie d'un pignon monté fixe qui engrène les satellites 58 du deuxième train d'engrenages 23. Ainsi, les satellites 58 du deuxième train d'engrenages 23 sont reliés à l'arbre rotor 53 par l'intermédiaire du premier train d'engrenages 22. Lorsque l'arbre intermédiaire 52 est entraîné en rotation autour de l'axe longitudinal A, par l'intermédiaire de l'arbre rotor 53, l'arbre intermédiaire 52 entraîne en rotation les satellites 58 qui entraînent en rotation le deuxième porte satellites 57, et ce dernier entraîne en rotation l'arbre moteur 19. Le premier train d'engrenages 22 est optionnel, il permet de réduire davantage le couple fourni par l'arbre moteur 19. En variante, on peut coupler directement les satellites 58 du deuxième train d'engrenages 23 à l'arbre rotor 53.

Lorsque le moteur 15 fournit un premier couple moteur inférieur à un seuil de couple de référence, la deuxième couronne extérieure 59 ne tourne pas. Dans ce cas, la deuxième couronne extérieure 59 est dans une position initiale dans laquelle elle est immobile. En outre, le moteur 15 fournit un couple à l'arbre moteur 19 qui transite par successivement, l'arbre rotor 53, les satellites 55, la première couronne extérieure 56 et le premier porte satellites 54 du premier train d'engrenages 22, l'arbre intermédiaire 52, les satellites 58, la deuxième couronne extérieure 59 et le deuxième porte satellites 57 du deuxième train d'engrenages 23, et l'arbre moteur 19. Puis, lorsque le couple fourni par le moteur 15 dépasse le seuil de couple de référence, alors la deuxième couronne extérieure 59 quitte sa position initiale et commence à tourner autour de l'axe longitudinal A du moteur 15, en effectuant un certain déplacement angulaire. Afin de limiter le couple du moteur 15, pour qu'il soit inférieur ou égal au seuil de couple de référence, on détecte le déplacement angulaire de la deuxième couronne extérieure 59 et on arrête le moteur 15. Le dispositif de limitation 51 comprend un moyen de contrôle 60 afin de réguler le moteur 15 pour que le couple fourni ne dépasse pas le seuil de couple de référence.

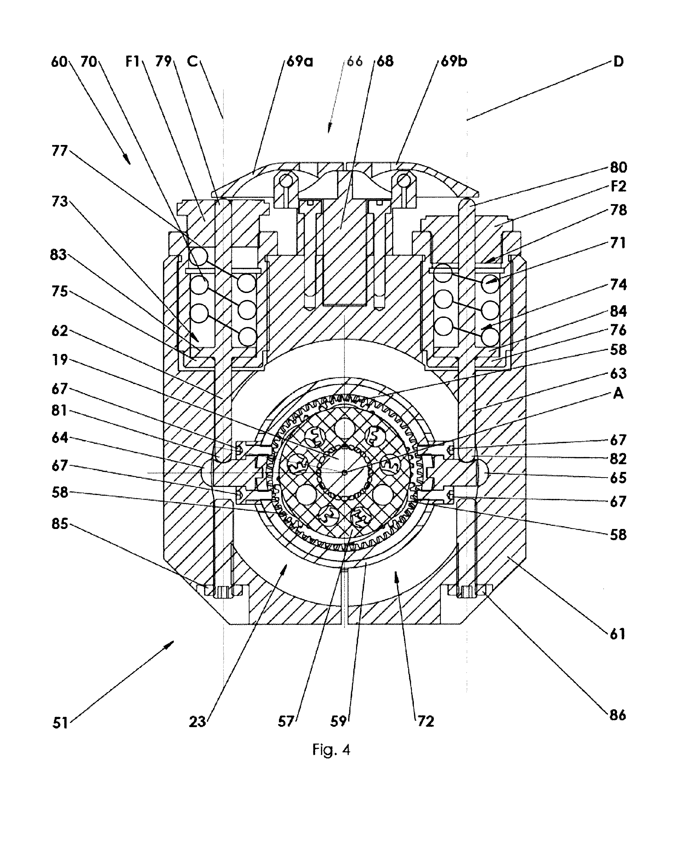

Sur la figure 4, on a représenté schématiquement une vue en coupe selon l'axe A-A de la figure 3. On a également reporté sur la figure 4 certains éléments décrits ci-avant aux figures précédentes. La figure 4 représente une vue du dessus du dispositif de limitation de la figure 3.

Le moyen de contrôle 60 comporte un boîtier 61, deux tiges 62, 63, deux éléments d'appui 64, 65 et un organe de coupure 66. Les tiges 62, 63 sont montées, au sein du boîtier 61, mobiles en translation respectivement le long de deux axes C, D. Les axes C, D sont sensiblement perpendiculaires à l'axe longitudinal A du moteur 15. Par exemple, les axes C, D peuvent être parallèles entre eux. Les tiges 62, 63 sont de préférence dans un même plan. En variante, les deux tiges 62, 63 peuvent être dans deux plans respectifs différents. Chaque tige 62, 63 est montée mobile en translation entre une position de repos dans laquelle le moteur 15 est en fonctionnement et une position d'arrêt dans laquelle le moteur 15 est arrêté. De façon générale, lorsque les tiges 62, 63 sont en position de repos, le moteur 15 est en fonctionnement, c'est-à-dire que soit l'arbre moteur 19 est animé en rotation autour de l'axe longitudinal A et le moteur 15 fournit un couple inférieur au seuil de couple de référence, soit l'arbre moteur 19 est immobile et le moteur 15 est dans une position initiale non démarré. Lorsqu'au moins une tige 62, 63 atteint sa position d'arrêt, le moteur 15 est arrêté. On note que les tiges 62, 63 atteignent leur position d'arrêt seulement si le couple fourni par le moteur 15 est supérieur au seuil de couple de référence. Dans ce cas, on arrête le moteur 15 en arrêtant l'alimentation en air du moteur 15. Lorsque le moteur 15 est arrêté, le couple fourni par le moteur 15 diminue, ce qui limite le couple fourni par le moteur 15. Sur la figure 4, les deux tiges 62, 63 sont représentées dans leurs positions respectives de repos.

Les éléments d'appui 64, 65 sont montés fixes, via des vis 67, sur une face externe de la deuxième couronne extérieure 59, de préférence diamétralement opposés par rapport au diamètre de la deuxième couronne extérieure 59. Chaque élément d'appui 64, 65 est associé à une tige 62, 63. En outre, chaque élément d'appui 64, 65 est apte à déplacer la tige 62, 63 à laquelle il est associé, dans sa position d'arrêt lorsque l'élément d'appui 64, 65 effectue un déplacement angulaire selon l'axe longitudinal A qui est supérieur à un seuil angulaire déterminé. Le seuil angulaire déterminé correspond au seuil de couple moteur de référence. Lorsque le couple du moteur 15 est inférieur au seuil de couple moteur de référence, la deuxième couronne extérieure 59 est dans sa position initiale et les éléments d'appui 64, 65 sont en contact avec les tiges 62, 63 auxquelles ils sont associés sans déplacer les tiges 62, 63. Lorsque le couple du moteur 15 est supérieur au seuil de couple moteur de référence, la deuxième couronne extérieure 59 effectue un déplacement angulaire autour de l'axe longitudinal A et un premier élément d'appui 64 pousse la tige 62 à laquelle il est associé et déplace la tige 62 en translation le long de l'axe C. Simultanément, un deuxième élément d'appui 65 s'éloigne de la tige 63 à laquelle il est associé. A l'inverse, lorsque la deuxième couronne extérieure 59 effectue un déplacement angulaire selon un sens inverse de rotation, le premier élément d'appui 64 s'éloigne de la tige 62 à laquelle il est associé et le deuxième élément d'appui 65 pousse la tige 63 qui se déplace en translation le long de l'axe D.

En outre, l'organe de coupure 66 est configuré pour arrêter le moteur 15 lorsque le couple fourni est supérieur au seuil de couple moteur de référence. L'organe de coupure 66 peut être un système mécanique ou électrique configuré pour couper l'arrivé d'air du moteur pneumatique 15. Par exemple, l'organe de coupure 66 comprend un contacteur 68 et deux languettes 69a, 69b montées pivotantes sur le boîtier 61. Les languettes 69a, 69b sont montées en appui contre respectivement les tiges 62, 63. Lorsque les tiges 62, 63 sont dans leurs positions de repos, les languettes 69a, 69b sont dans une position initiale dans laquelle le contacteur 68 ouvre un circuit de commande du moteur 15, non représenté ici à des fins de simplification, et le moteur 15 est en fonctionnement. Lorsqu'au moins une tige 62, 63 atteint sa position d'arrêt, au moins une languette 69a, 69b pivote pour déplacer le contacteur 68 qui ferme le circuit de commande, ce qui arrête l'alimentation en air du moteur et arrête le moteur 15.

Le dispositif de limitation 51 peut en outre comprendre des organes élastiques 70, 71, par exemple des ressorts, respectivement associés aux tiges 62, 63. Le boîtier 61 comprend en outre une chambre 72 dans laquelle sont logés le deuxième train d'engrenages 23, et deux logements respectifs 73, 74 pour les organes élastiques 70, 71. La chambre 72 forme un espace entre la deuxième couronne extérieure 59 et le boîtier 61. Chaque logement 73, 74 d'un organe élastique 70, 71 comporte une première paroi 75, 76 et une deuxième paroi 77, 78. Les deux parois d'un même logement d'un organe élastique sont situées en regard l'une de l'autre et sont sensiblement perpendiculaires aux axes de translation C, D des tiges 62, 63. Chaque tige 62, 63 traverse les première et deuxième parois 75, 76 et 77, 78 de sorte que chaque première extrémité 79, 80 des tiges 62, 63 se trouve en saillie à l'extérieur du boîtier 61, et chaque deuxième extrémité 81, 82 des tiges 62, 63 se trouve en saillie à l'intérieur de la chambre 72. Par ailleurs, chaque tige 62, 63 comprend un collet 83, 84 situé en appui contre la première paroi 75, 76 lorsque la tige 62, 63 est dans sa position de repos. Chaque organe élastique 70, 71 est situé autour du corps de la tige 62, 63, entre le collet 83, 84 et la deuxième paroi 77, 78. Dans ce cas, chaque tige 62, 63 est maintenu dans sa position de repos par l'organe élastique associé 70, 71. Par ailleurs, lorsqu'une tige 62, 63 est déplacée par l'élément d'appui 64, 65 associé, l'organe élastique 70, 71 associé se déforme de façon à permettre à la tige 62, 63 d'atteindre sa position d'arrêt.

Par ailleurs, le dispositif de limitation 51 peut également comprendre deux pièces filetées F1, F2, ayant chacune une face formant respectivement les deuxièmes parois 77, 78 des logements 73, 74. On peut ainsi régler la position des pièces filetées de façon à modifier l'état de contrainte de chaque organe élastique 70, 71. Par exemple, les organes élastiques 70, 71 peuvent avoir une même raideur. En outre, le premier organe élastique 70 associé à la tige 62 peut être dans un état de contrainte correspondant au seuil de couple moteur de référence, et le deuxième organe élastique 71 est dans un état de contrainte différent de celui du premier organe élastique 70. Ainsi, on peut limiter différemment le couple fourni par le moteur 15 selon les deux sens de rotation de celui-ci.

Le boîtier 61 peut également comporter deux butées 85, 86 associées respectivement aux tiges 62,62. Par exemple, les butées 85,86 associées peuvent être des vis réglables. Chaque butée 85, 86 est située en regard d'un élément d'appui associé 64, 65 de sorte que l'élément d'appui associé puisse se déplacer angulairement dans un espace de la chambre 72 situé entre la tige et la butée. Chaque butée 85, 86 permet d'empêcher un élément d'appui d'effectuer un déplacement angulaire supérieur à un seuil limite.

En variante, le dispositif de contrôle 60 peut comprendre une seule tige 62, et un seul élément d'appui 64. Dans ce cas on limite le couple fourni par le moteur 15 selon uniquement un sens de rotation.

Un tel dispositif de limitation de couple est plus précis car il permet de détecter finement le déplacement angulaire de la couronne externe du train d'engrenage épicycloïdal du dispositif de réduction de couple du moteur. Ce dispositif de limitation est particulièrement adapté aux actionneurs de vanne qui nécessitent de manoeuvre les vannes avec une grande précision afin de ne pas les endommager.

Sur les figures 5 et 6, on a représenté une vue détaillée de la vanne décrite aux figures 1 et 2. On a également reporté sur les figures 5 et 6 certaines références définies ci-avant. En outre, la vanne 1 comporte un siège de vanne 93 configuré pour recevoir la tête 14 de la soupape 12 lorsque la soupape 12 est dans sa position de fermeture. En particulier, le deuxième module 5 est amovible afin de fournir un accès au siège de vanne 93. Le siège de vanne 93 est également amovible, et peut être extrait du corps 92 de la vanne 1 après un démontage du deuxième module 5. Le deuxième module 5 comporte également un logement du siège 94 pour maintenir le siège 93 lors de la juxtaposition des modules 3, 5. Par exemple, lors d'une étape de maintenance de la vanne, on peut être amené à vouloir remplacer le siège de vanne 93. Pour cela, on démonte la vanne 1 en retirant le deuxième module 5, puis on retire le siège de son logement 94 prévu sur le deuxième module 5. On peut ainsi remplacer le siège 93 en plaçant un nouveau siège dans le logement 94 et en remontant le deuxième module 5 sur le premier module 3.

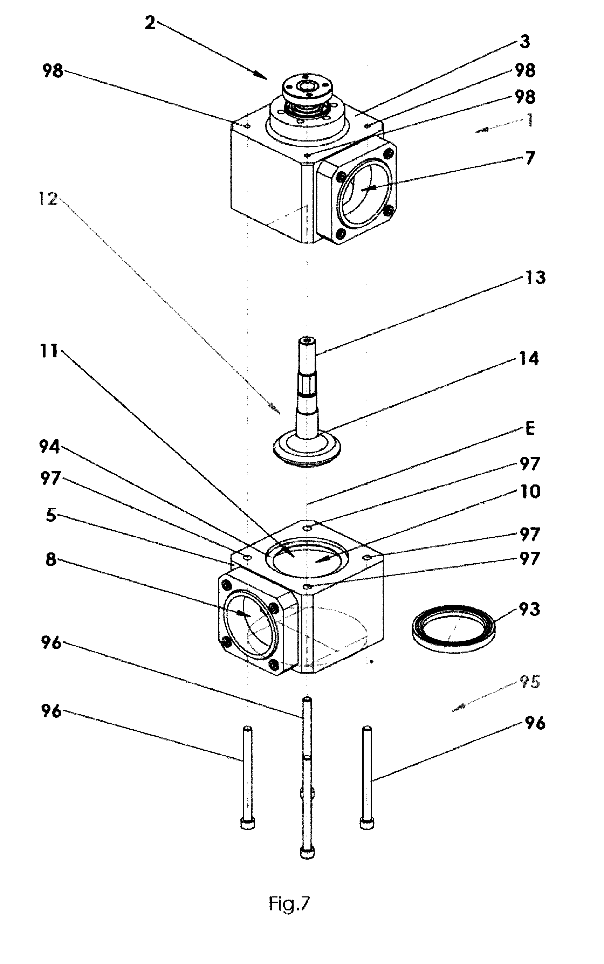

Sur la figure 7, on a représenté schématiquement une vue en perspective de la vanne 1 de distribution d'un fluide dans une configuration démontée. On a également reporté sur la figure 7 certains éléments décrits ci-avant aux figures précédentes. Les premier et deuxième modules 3, 5 ont une forme globalement parallélépipédique et le siège 93 a une forme globalement cylindrique adaptée à la forme de la tête 14 de la soupape 12.

Afin de pouvoir monter la vanne 1, celle-ci comporte des moyens de fixation 95 pour maintenir les premier et deuxième modules 3, 5 solidaires lors de leur juxtaposition. Selon un mode de réalisation préféré, les moyens de fixation 95 comprennent des vis de fixation 96 qui traversent des premiers alésages 97 prévus sur le deuxième module 5 et des deuxièmes alésages 98 prévus sur le premier module 3. Par exemple, des écrous, non représentés à des fins de simplification, sont visés aux extrémités des vis 96 pour le maintien des modules 3, 5. On peut noter sur la figure 7 que les deuxièmes alésages 98 sont situés en regard respectivement des premiers alésages 97. Selon un autre mode de réalisation, chaque deuxième alésage 98 comprend un pas de vis qui remplace l'écrou et qui coopère avec une vis de fixation 96 pour maintenir les deux modules 3, 5 solidaires. En particulier, les premiers et deuxièmes alésages 97, 98 sont situés à équidistance d'un axe longitudinal E de la soupape 12.

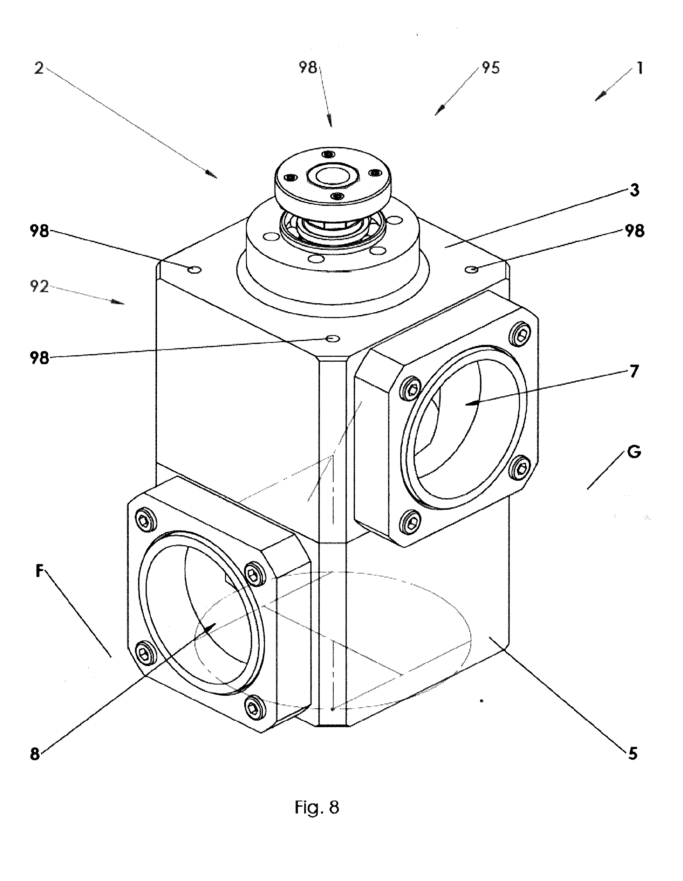

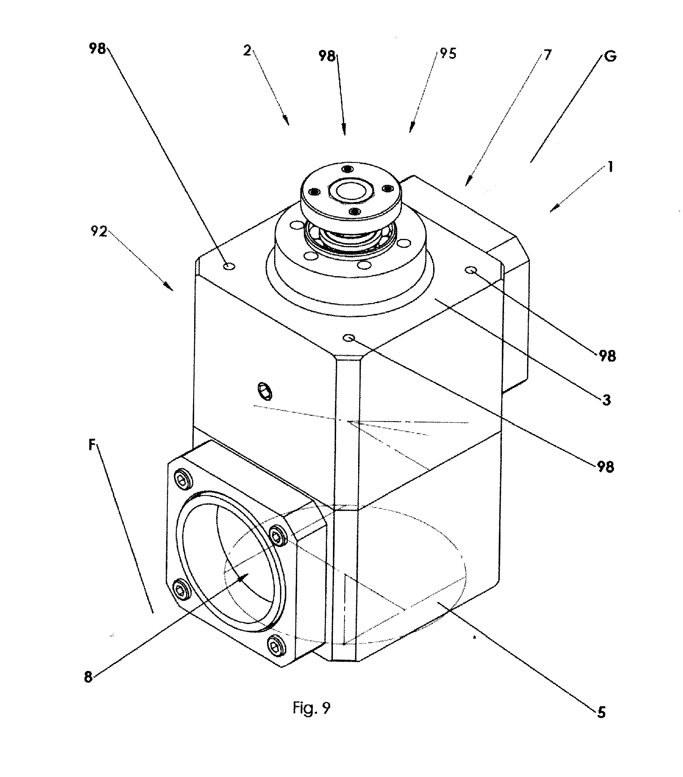

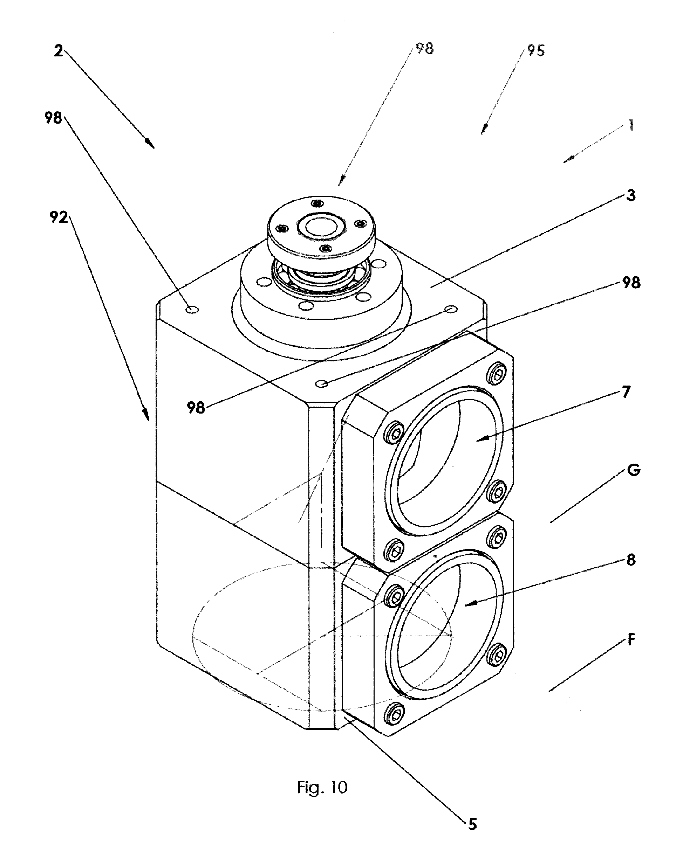

Sur les figures 8 à 10, on a représenté schématiquement des vues en perspective d'autres modes de réalisation d'une vanne de distribution d'un fluide 1. On a également reporté sur les figures 8 à 10 certains éléments décrits ci-avant aux figures précédentes. Le deuxième module 5 mobile est en outre configuré pour être monté sur le premier module 3 selon plusieurs positions distinctes. Chaque position distincte correspond à une direction d'orientation F particulière de la deuxième ouverture 8 par rapport à une direction d'orientation G de la première ouverture 7. Ainsi, le deuxième module 5 amovible permet un changement d'orientation du fluide qui traverse la deuxième ouverture 8. Selon le nombre et la position des premiers et deuxièmes alésages 97, 98 de la vanne 1, l'angle entre la direction d'orientation F de la deuxième ouverture 8 et la direction d'orientation G de la première ouverture 7 peut prendre un valeur quelconque comprise entre 0° et 360°. Selon un mode de réalisation particulier, dans lequel la vanne comporte quatre premiers alésages 97 et quatre deuxièmes alésages 98 situés à équidistance d'un axe longitudinal E de la soupape 12, l'angle est égal à l'une des valeurs parmi un ensemble de valeurs d'angles comprenant 0°, 90°, 180°, et 270°. La figure 8 représente un deuxième module 3 monté sur le premier module 1 et dont la direction d'orientation F est inclinée par rapport à la direction d'orientation G du premier module 3 selon un angle égal à 90°. La figure 9 représente un deuxième module 3 monté sur le premier module 1 et dont la direction d'orientation F est inclinée par rapport à la direction d'orientation G du premier module 3 selon un angle égal à 180°. La figure 10 représente, quant à elle, un deuxième module 3 monté sur le premier module 1 et dont la direction d'orientation F est inclinée par rapport à la direction d'orientation G du premier module 3 selon un angle égal à 0°.

Une telle vanne permet d'être démontée facilement afin de pouvoir remplacer le siège de vanne amovible lorsque celui-ci est usé ou endommagé.

## Revendications

1. Actionneur de vanne, comprenant une roue dentée (21) apte à être animée en rotation pour commander la vanne, un volant de commande (16) pour entraîner en rotation la roue dentée (21) de façon manuelle, et un moteur (15) pour entraîner en rotation la roue dentée (21) de façon automatique, **caractérisé en ce qu'il** comporte un pignon (20) monté mobile en rotation pour engrener la roue dentée (21), et monté mobile en translation entre une première position (P) dans laquelle le pignon (20) est entraîné en rotation par le volant de commande (16) et une deuxième position dans laquelle le pignon (20) est entraîné en rotation par le moteur (15).

2. Actionneur selon la revendication 1, comprenant un coulisseau (38) monté déplaçable en translation le long d'un axe de translation (A) du pignon (20), le pignon (20) étant monté libre en rotation sur une extrémité du coulisseau (38), l'actionneur comprenant en outre un arbre menant (25) apte à être entraîné par le volant de commande (16), l'arbre menant (25) étant un arbre creux traversé par le coulisseau (38) et comportant des moyens d'entraînement (36) configurés pour entraîner en rotation le pignon (20) lorsque le pignon (20) est dans la première position (P).

3. Actionneur selon la revendication 1 ou 2, dans lequel le moteur (15) est un moteur du type pneumatique, ou hydraulique.

4. Actionneur selon l'une des revendications 1 à 3, dans lequel le moteur (15) est configuré pour entraîner le pignon (20) en rotation lorsque le coulisseau (38) est déplacé en translation de façon que le pignon (20) soit dans la deuxième position.

5. Actionneur selon l'une des revendications 1 à 4, comprenant un organe élastique (44) configuré pour exercer une force sur le coulisseau (38) de façon à maintenir le pignon (20) dans la première position (P), et pour se déformer de façon à permettre le déplacement en translation du coulisseau (38).

6. Actionneur selon l'une des revendications 1 à 5, comprenant un arbre d'entraînement (24) apte à entraîner le pignon (20) en rotation, le volant de commande (16) étant monté libre en rotation sur l'arbre d'entraînement (24), l'actionneur comprenant en outre un moyen de sécurité (101) mobile entre une position de verrouillage dans laquelle le volant de commande (16) est relié mécaniquement à l'arbre d'entraînement (24) et une position de sécurité dans laquelle le volant de commande (16) est maintenu libre en rotation sur l'arbre d'entraînement (24).

7. Actionneur selon la revendication 6, dans lequel le moyen de sécurité (101) comporte une goupille (102) montée mobile sur le volant de commande (16) et un flasque (103) monté fixe sur l'arbre d'entraînement (24), le flasque (103) comportant un orifice (104) prévu pour recevoir la goupille (102) dans sa position de verrouillage.

8. Actionneur selon la revendication 6 ou 7, dans lequel le pignon (20) est configuré pour être relié mécaniquement à l'arbre d'entraînement (24) lorsque le pignon (20) est dans sa première ou sa deuxième position.
